Europäisches Patentamt

European Patent Office

Office européen des brevets

(11) Publication number : **0 647 537 A1**

(12) **EUROPEAN PATENT APPLICATION**

(21) Application number : **94307345.2**

(22) Date of filing : **06.10.94**

(51) Int. Cl.⁶ : **B60G 21/05**

(30) Priority : **06.10.93 GB 9320611**
**26.02.94 GB 9403732**

(43) Date of publication of application :
**12.04.95 Bulletin 95/15**

(84) Designated Contracting States :
**AT BE CH DE DK ES FR GB GR IE IT LI LU MC**
**NL PT SE**

(71) Applicant : **PRE-STAR LIMITED**
**Ampthill Road**
**Bedford MK42 9RT (GB)**

(72) Inventor : **Giles, Roderick John**
**84 Christchurch Drive**
**Daventry, Northants NN11 4TL (GB)**
Inventor : **Hope, Stephen William**
**4 Brook Drive**
**Kempston, Bedford MK42 7DB (GB)**

(74) Representative : **W.P. THOMPSON & CO.**
**Eastcheap House**
**Central Approach**
**Letchworth, Hertfordshire SG6 3DS (GB)**

(54) **Control of torsional stiffness in beams and the like.**

(57)    A beam, bar or other like article, especially for
motor vehicles, which in use is subjected to
torsional forces, comprises a substantially
straight centre portion (12) and end portions
(13) set at an angle to the centre portion. At
least the tubular centre portion (12) has its
torsional stiffness modified by the provision of a
slot (34) in the tube and by deformation of walls
(16, 18) of the tube. The slot (34) preferably
extends into the end portions (13). Depending
upon needs, one can provide a slot or slots, or
deform a wall or walls, or both.

Fig. 8.

EP 0 647 537 A1

This invention relates to articles such as beams, tubes, bars and other like sections, which in use are subject to torsional forces. The invention is also concerned with methods of manufacturing such elongate tubular articles.

The invention is particularly applicable to the manufacture of components for the automotive industry, e.g. rear axle beams, anti-roll bars, etc.

In the automotive industry it is known to manufacture certain components, such as sub-frame tubes, by a process known as hydroforming. This involves the application of hydraulic pressure, in a die, and possibly also the use of movable die inserts, to change the contour of a section. In the conventional process the tube or other section is constrained to keep a constant cross-sectional area, although local deformation can be introduced by the use of movable die inserts.

There is a particular problem in the automotive industry relating to the production of a "torsion twist beam" rear axle for motor vehicles. The conventional torsion twist beam rear axle comprises a standard beam, and if one wishes to increase the torsional stiffness for higher performance or heavier models of a particular vehicle then one has to "add on" components to produce the desired effect. For example, additional torsion springs are added to one basic rear axle, to give the required range of torsional stiffness. This results in increased cost and complexity, and also increased weight.

It is also known from EP-0229576 to manufacture a semi-rigid axle of U-shaped configuration for a vehicle, where the axle has a tubular central zone and two arms, one at each end of the central zone, wherein the central zone is so profiled as to have at least one limb of double wall structure. With this construction the central portion of the axle is substantially deformed, with walls of the section in face-to-face contact.

It is an object of the present invention to apply hydroforming and other techniques and modifications thereof to the manufacture of components which in use are subject to torsional forces, in order thereby to obtain a desired torsional stiffness for the component.

It is a further object of the invention to provide components and methods of making them where one can vary the torsional stiffness, so that one can create components having a particular desired torsional stiffness, to order as it were.

It is yet a further object of the invention to provide elongate tubular articles which in use are subject to torsional forces, where there is a reduction in weight, as well as reduced cost and complexity, as compared with traditional components.

In accordance with the present invention there is provided an elongate tubular article which in use is subject to torsional forces, comprising a substantially straight centre portion and respective end portions forming arms set at an angle to the centre portion, characterised in that at least the tubular centre portion has its torsional stiffness modified to a predetermined value or values by the provision of a slot or slots in the tube and/or by deformation of a wall or walls of the tube in such a manner as to reduce the enclosed area and maintain a single substantial passageway therethrough.

The centre portion may have one or more lengthwise slots therein, preferably in opposed walls of the tube if more than one slot is provided.

Preferably, the article has at least one slot lengthwise of the centre portion, with the slot or at least one of the slots, if there is more than one, extending from the centre portion into the end portions. There is a stress concentration at the end of the slot or slots due to the abrupt change in torsional stiffness when transferring from an open section to a closed one. In order to minimise this stress the slot or slots are arranged to extend around the bends in the article, from the centre portion into the end arms. By doing this there is then no abrupt change in torsional stiffness in the "active" part of the tube.

Also in accordance with the invention there is provided a method of manufacturing an elongate tubular article which in use is subjected to torsional forces, which comprises forming the article with a substantially straight centre portion and respective end portions forming arms set at an angle to the centre portion, characterised in that during or after the forming process a slot or slots are made in the centre portion and/or a wall or walls of the centre portion are deformed in such a manner as to reduce the enclosed area and maintain a single substantial passageway therethrough, thereby to modify the torsional stiffness of the centre portion.

If slots are provided, these can be made either during the forming process or as a separate operation after forming has taken place. The length and/or width of the slots can be varied to achieve the required stiffness.

With the present invention it is possible to control the torsional stiffness of the article by appropriate deformation of the section and/or by the provision of a slot or slots, in a controlled manner, thereby to obtain the desired torsional stiffness for the article.

A further advantage of the invention is that if one wishes to design a torsion twist beam rear axle for example for a range of vehicle models, such as low stiffness for the basic model, medium stiffness for an estate model and high stiffness for a high performance model, then one can produce a range of beams having the desired characteristics from just one basic beam, simply by appropriate variation of the cross-sectional area and/or by appropriate variation of the position and dimensions of the slot or slots. This completely avoid the need to "add on" components, such as springs, in order to produce a range of articles.

In order that the invention may be more fully understood, a number of embodiments in accordance with the invention will now be described by way of example and with reference to the accompanying drawings. In the drawings:

Fig. 1 is a perspective view of a torsion twist beam rear axle for a motor vehicle;

Fig. 2 is a cross-section through a first embodiment of torsion beam in accordance with the invention;

Fig. 3 is a cross-section through a second embodiment of torsion beam in accordance with the invention;

Fig. 4 is a plan view of part of a rear cross-beam in accordance with the invention for a motor vehicle omitting the associated parts;

Fig. 5 is a side view of part of the cross-beam shown in Fig. 4;

Fig. 6 is the sectional view taken along the line VI-VI in Fig. 4;

Fig. 7 is the sectional view taken along the line VII-VII in Fig. 4;

Fig. 8 is a plan view of part of a further embodiment of rear cross-beam in accordance with the invention, for a motor vehicle, omitting the associated parts;

Fig. 9 is a side view of part of the cross-beam shown in Fig. 8;

Fig. 10 is the sectional view taken along the line X-X in Fig. 8 on an enlarged scale; and,

Fig. 11 is the sectional view taken along the line XI-XI in Fig. 8 on an enlarged scale.

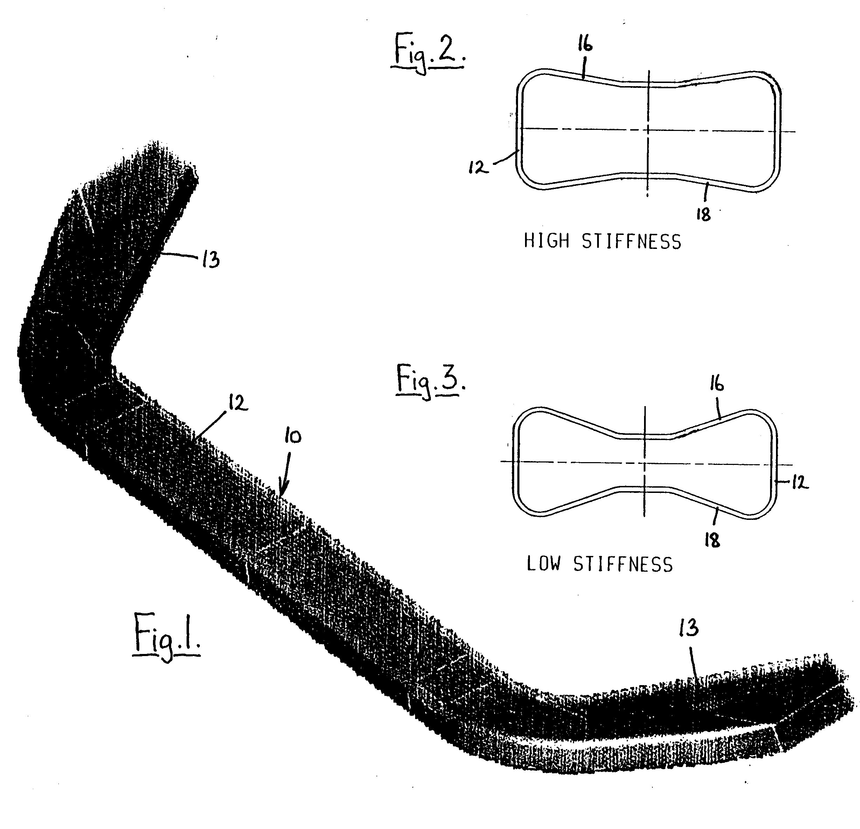

The torsion twist beam rear axle indicated generally at 10 in Fig. 1 is, in use, fitted with brackets, bearings, etc., for the mounting of the rear wheels of the vehicle thereon. It has an essentially rectangular cross-section. It comprises a centre portion 12 and two end portions 13 which form arms set at an angle to the centre portion 12. This angle is of the order of 45°. The arms 13 are not set in the plane of the centre portion 12 but slope upwards towards the wheel mounting points.

Fig. 2 shows an embodiment of beam of essentially rectangular cross-section in the centre portion 12. The two opposing longer sides 16, 18 of the beam are deformed inwards in order to produce a higher stiffness than in the undeformed state. In this embodiment the deformation is produced by the use of sliding cams which progressively crush the longer sides of the rectangle inwards, reducing the enclosed area, and thus reducing the torsional modulus of the section. The basic formula for the torsional modulus of a closed thin-walled section is:

$$J = 4A^2t/U$$

where

    J = torsional modulus

    A = mean section area

    t = wall thickness

    U = mean section periphery.

Thus, for a particular desired torsional stiffness of a component, one can calculate the area reduction which is necessary in order to produce that stiffness, and shape the beam accordingly.

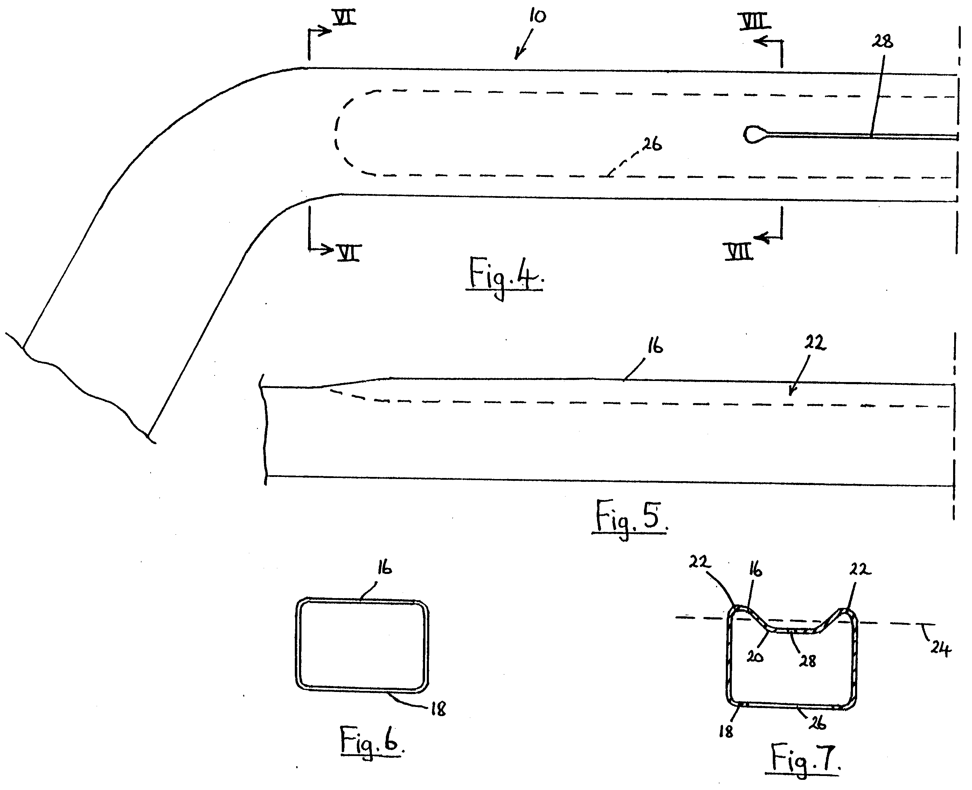

Fig. 3 shows another beam where the central portion 12 has been more greatly deformed by inward deformation of the longer sides 16 and 18. It is to be noted that increased deformation, such as is shown for example in Fig. 3, will result in a reduced stiffness, not a higher stiffness. The initial deformation of an essentially rectangular section such as is shown will produce an increased stiffness, but after a certain amount of deformation the stiffness will reduce and continue reducing as the deformation increases.

Although in Figs. 2 and 3 the beam is shown as having both longer sides 16, 18 deformed inwards, in one alternative one could deform just one of the longer sides, resulting in a C-section which would have a different torsional modulus.

The rear cross-beam indicated generally at 10 in Fig. 4 is, in use, again fitted with brackets, bearings, etc., for the mounting of the rear wheels of the vehicle thereon. The cross-beam has an essentially rectangular cross-section. In order to provide torsional stiffness for the cross-beam its cross-sectional area is varied along its length. As will be seen from Fig. 6, at that zone of the cross-beam the cross-section is almost truly rectangular. In the zone between that part of the cross-beam and the equivalent point towards the other end of the cross-beam (not shown), the component has a modified cross-section, as shown most clearly in Fig. 7. The upper wall 16 of the beam is depressed towards the centre to form an inward protuberance 20. The cross-section is raised along each side as indicated at 22. This deformation can be achieved for example by the use of a hydroforming technique and movable dies. The plane in which the deformed upper wall 16 of the tube originally lay is indicated at 24.

The upper wall 16 and the lower wall 18 of the beam are each provided with a slot. In the bottom wall 18 there is provided a lengthwise extending slot 26 which extends substantially the full length of the linear portion of the beam and which extends over a substantial part of the width of the beam. In the upper wall 16 of the beam there is provided a shorter, narrow slot 28. Each of the slots 26 and 28 is aligned with the longitudinal axis of the cross-beam.

The length and/or width of the slots 26 and 28 can be altered to vary the torsional stiffness. In other words, the torsional stiffness can be tailored to the particular design requirements by the use of appropriately dimensioned and positioned slots.

Although the embodiment described has slots in both the upper and lower walls of the beam, one could alternatively dispense with one or other of these slots. The number, length and position of the slots 26 and 28 is given purely by way of example.

Additionally, although in this embodiment there is shown the use of deformation as well as the provision of slots, one could alternatively have a component in which a slot or slots are provided without deformation of the tubular section.

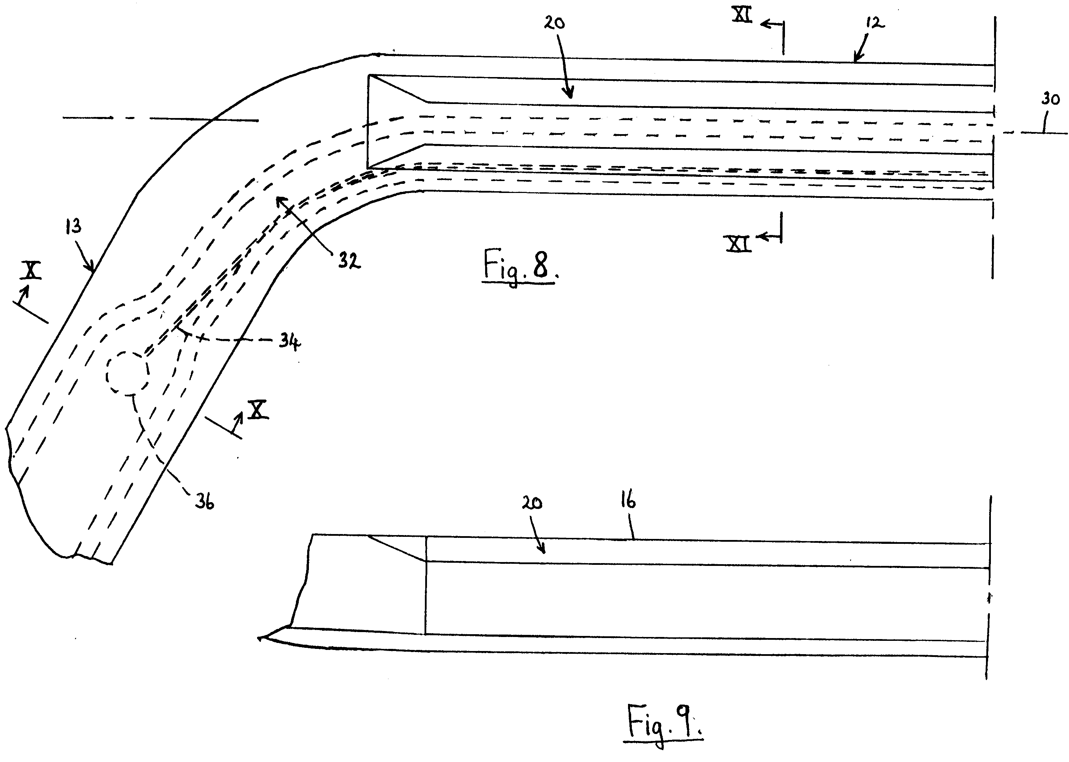

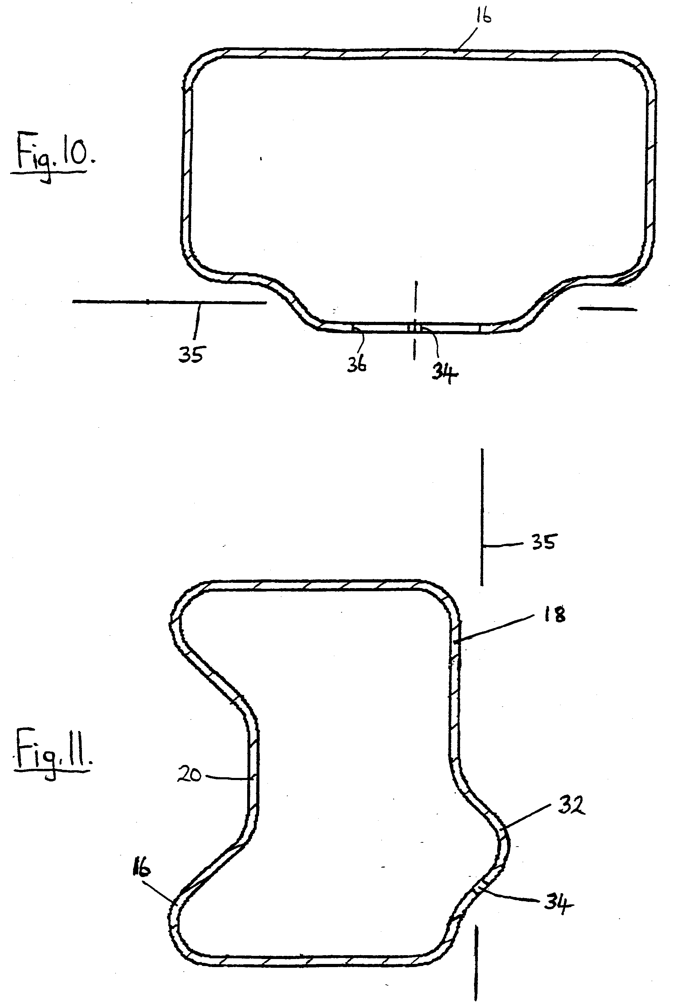

Reference is now made to the embodiment shown in Figs. 8 to 11. This again shows a vehicle rear cross-beam of substantially rectangular cross-section. In this embodiment there is illustrated a combination of deformation and slots. The one arm 13 which is shown extends at an angle of about 45° to the longitudinal axis 30 of the central portion 12 of the cross-beam. As shown most clearly in Fig. 11, in this embodiment there is deformation of both the upper wall 16 and of the lower wall 18 of the tube. The upper wall 16 is deformed to produce an inward protuberance 20, and the lower wall 18 is deformed to produce an outward protuberance 32. The plane in which the lower wall 18 originally lay is indicated at 35. In the lower, outward protuberance 32 is provided a slot 34, in one sloping face of the protuberance 32. As shown most clearly in Fig. 8, this slot 34 extends from the centre portion 12 around the bend in the cross-beam and into the arm portion 13, where it terminates in a circular hole 36, as shown in both Figs. 8 and 10. Again with reference to Figs. 8 and 10, it will be seen that the bottom protuberance 32 also extends around the bend in the cross-beam and in the region where the slot 34 terminates is broadened out and centered with respect to the axis of the arm portion 13. It will also be noted that the inward protuberance 20 in the upper wall 16 terminates in the region of the junction between the centre portion 12 and the arm 13, and that the upper wall 16 is flat over the length of the arm 13.

It should be appreciated from the various embodiments which have been described above that the torsional stiffness of an article such as a cross-beam for a motor vehicle can be varied, in a controlled manner, to give a predetermined value or values for torsional stiffness along the length of the component, by the provision of a slot or slots and/or by the deformation of a wall or walls of the tube. In other words, one can have slots, or deformation, or both, depending upon the particular needs. In each case however one maintains a single substantial passageway through the tube. When slots are provided, these can be made either during the forming process for the component, or as a separate operation after forming has taken place. The lengths and/or widths of the slots can be altered to achieve the required stiffness.

Although the present invention is particularly applicable to the manufacture of torsion twist beam axles, it is also applicable to the production of anti-roll bars for example, as well as other automotive components whichare made of closed, thin-rolled sections.

## Claims

1. An elongate tubular article (10) which in use is subjected to torsional forces, comprising a substantially straight centre portion (12) and respective end portions forming arms (13) set at an angle to the centre portion, in which at least the tubular centre portion (12) has its torsional stiffness modified to a predetermined value or values by the provision of a slot or slots (26, 28; 34) in the tube and/or by deformation (20, 22; 20, 32) of a wall or walls of the tube in such a manner as to reduce the enclosed area and maintain a single substantial passageway therethrough.

2. An article as claimed in claim 1, characterised in that the centre portion (12) has lengthwise slots (26, 28) therein in opposed walls (18, 16) of the tube.

3. An article as claimed in claim 1, characterised in that the centre portion (12) of the tube is deformed (20, 32) on opposed sides.

4. An article as claimed in claim 1, characterised in that the centre portion (12) of the tube is deformed (20) on one side only.

5. An article as claimed in claim 3, characterised in that at least one of the deformed zones (20; 32) has a lengthwise slot (28; 34) therein.

6. An article as claimed in claim 4, characterised in that the deformed zone (20; 32) has a lengthwise slot (28; 34) therein.

7. An article as claimed in any preceding claim, which has at least one slot (34) lengthwise of the centre portion (12), with the slot or at least one of the slots extending from the centre portion (12) into the end portions (13).

8. An article as claimed in any preceding claim, characterised in that the centre portion (12) is substantially rectangular in cross-section, and a wall (16; 18) of the centre portion is deformed so that a part thereof lies outwardly of the original plane (24; 35) of the wall and a part thereof lies inwardly of the said plane.

9. An article as claimed in any preceding claim, characterised in that the centre portion (12) is substantially rectangular in cross-section, and two opposed walls (16, 18) of the centre portion are deformed, one to form an inward protuberance (20) and one to form an outward protuberance (32).

10. An article as claimed in any preceding claim, characterised by a wall deformation (32) extending from the centre portion (12) into the end portions (13).

11. A method of manufacturing an elongate tubular article which in use is subjected to torsional forces, which comprises forming the article with a substantially straight centre portion and respective end portions forming arms set at an angle to the centre portion, characterised in that during or after the forming process a slot or slots are made in the centre portion and/or a wall or walls of the centre portion are deformed in such a manner as to reduce the enclosed area and maintain a single substantial passageway therethrough, thereby to modify the torsional stiffness of the centre portion.

12. A method as claimed in claim 11, characterised by having a slot or slots lengthwise in the centre portion, with the slot or at least one of the slots extending from the centre portion into the end portions.

13. A method as claimed in claim 11 or 12, characterised by deforming a wall or walls of the centre portion by a moving die or dies.

Fig.2.

HIGH STIFFNESS

Fig.3.

LOW STIFFNESS

Fig.1.

EP 0 647 537 A1

Fig.4.

Fig.5.

Fig.6.

Fig.7.

Fig. 8.

Fig. 9.

EP 0 647 537 A1

Fig. 10.

16

35

36

34

Fig. 11.

35

18

20

32

16

34

# DOCUMENTS CONSIDERED TO BE RELEVANT

| European Patent Office | EUROPEAN SEARCH REPORT | Application Number |
|---|---|---|
| | | EP 94 30 7345 |

| Category | Citation of document with indication, where appropriate, of relevant passages | Relevant to claim | CLASSIFICATION OF THE APPLICATION (Int.Cl.6) |
|---|---|---|---|
| X | DE-A-40 24 256 (MATZEIT) <br> * abstract; figures * <br> --- | 1,11 | B60G21/05 |
| X | EP-A-0 386 377 (JAGUAR) <br><br> * column 1, line 50 - column 2, line 37; figure * <br> --- | 1,7,11,12 | |
| X | GB-A-2 220 175 (FORD) <br> * page 4, line 5 - line 6; figures 1,2 * <br> --- | 1,11 | |
| X <br> A | GB-A-452 173 (MICHELIN) <br> * page 1, line 62 - line 64; claim 1; figures 4-11,21 * <br> --- | 1,11 <br> 4,8,9 | |
| D,X | EP-A-0 229 576 (VALLOUREC) <br> * abstract; figures 1-3 * <br> --- | 1,11 | |
| X | EP-A-0 243 191 (SECRETARY OF STATE FOR TRADE AND INDUSTRY) <br> * column 3, line 12 - line 14; figures 1,2,6 * <br> --- | 1,11 | |
| A | GB-A-2 014 064 (MANNESMANN) <br> * the whole document * <br> --- | 11,13 | |
| A | FR-A-2 392 838 (LEAR SIEGLER) <br><br> * page 7, line 34 - page 8, line 15; figures 2,7,8 * <br> ----- | 1,3,11,13 | |

TECHNICAL FIELDS SEARCHED (Int.Cl.6)

B60G
B21K
B60B

The present search report has been drawn up for all claims

| Place of search | Date of completion of the search | Examiner |
|---|---|---|
| BERLIN | 9 January 1995 | Krieger, P |